# EUROPÄISCHE PATENTSCHRIFT

(11) **EP 3 286 997 B1**
(45) Veröffentlichungstag und Bekanntmachung des Hinweises auf die Patenterteilung: **24.04.2019**
(21) Anmeldenummer: 17191869.1
(22) Anmeldetag: 16.06.2011
(51) Int. Cl.: A01B 79/00

(54) **VERFAHREN ZUR SIMULATION UND BESTIMMUNG EINER EFFEKTIVEN BEARBEITUNGSWEISE VON LANDWIRTSCHAFTLICHEN FLÄCHEN**
METHOD FOR SIMULATING AND DETERMINING AN EFFECTIVE METHOD FOR WORKING AGRICULTURAL AREAS
PROCÉDÉ DE SIMULATION ET DE DÉTERMINATION D'UN TRAITEMENT EFFICACE DES SURFACES AGRICOLES

(30) Priorität: 06.08.2010 DE 102010033631
(43) Veröffentlichungstag der Anmeldung: 28.02.2018
(62) Teilanmeldung aus: 11725120.7
(73) Patentinhaber: Lacos Computerservice GmbH, 07937 Zeulenroda-Triebes (DE)
(72) Erfinder: DAMME, Bernd, 07937 Langenwolschendorf (DE); DAMME, Thomas, 07907 Göschitz (DE)
(74) Vertreter: Kruspig, Volkmar

(56) Entgegenhaltungen:
- EP-A1- 1 668 975
- EP-A1- 1 692 929
- EP-A2- 0 821 296
- EP-A2- 1 692 928
- EP-A2- 2 020 169
- WO-A2-2009/143399
- DE-A1- 19 921 995
- US-A1- 2009 240 430

## Beschreibung

Die Erfindung betrifft ein Verfahren zur Simulation und Bestimmung einer effektiven Bearbeitungsweise von landwirtschaftlichen Flächen, gemäß Patentanspruch 1.

Die Bearbeitungsstrategie bzw. die Bearbeitungsweise von landwirtschaftlichen Flächen ist sehr stark von der Gestaltung eines Geländes und von der Erfahrung des Fahrzeugführers einer landwirtschaftlichen Maschine abhängig. Unerfahrene Maschinenführer benötigen einige Zeit um eine effektive Bearbeitungsstrategie hinsichtlich des zeitlichen und materiellen Aufwandes für eine ausgewiesene landwirtschaftliche Fläche zu bestimmen. Oftmals geht dies mit wirtschaftlich oder technisch falsch bearbeiteten landwirtschaftlichen Flächen oder Schlägen einher.

EP-A1-1 692 929 offenbart ein Verfahren zur Simulation und Bestimmung einer effektiven Bearbeitungsweise eines landwirtschaftlichen Düngerstreuers.

Aus dem Vorgenannten ist es Aufgabe der vorliegenden Erfindung, ein Verfahren zur Simulation und Bestimmung einer effektiven Bearbeitungsweise von landwirtschaftlichen Flächen anzugeben.

Die Simulation ist von Vorteil, da verschiedene Bearbeitungsweisen und - strategien miteinander hinsichtlich des zeitlichen und finanziellen Aufwandes verglichen werden können und bereits im Vorfeld zur eigentlichen auszuführenden landwirtschaftlichen Tätigkeit, Aussagen über die später zu erzielenden Ergebnisse bzw. Ernteerträge gemacht werden können.

Die Lösung der Aufgabe erfolgt mit Hilfe eines Verfahrens zur Simulation und Bestimmung einer effektiven Bearbeitungsweise von landwirtschaftlichen Flächen gemäß Patentanspruch 1, wobei die Unteransprüche mindestens zweckmäßige Ausgestaltungen und Weiterbildungen darstellen.

Erfindungsgemäß ist das Verfahren zur Simulation und Bestimmung dadurch gekennzeichnet, dass eine Anzahl von Fahrspuren landwirtschaftlicher Maschinen in einem Vorgewende, eine Gestaltung von Fahrspuren landwirtschaftlicher Maschinen in der Hauptfläche im Hinblick auf optimierte Fahrstreckenlänge, eine Fahrzeit und einem Materialverbrauch und entstehenden Kosten bzgl. der Bearbeitung von landwirtschaftlichen Flächen simuliert und bestimmt wird.

Zu bearbeitende zusammenhängende landwirtschaftliche Flächen werden auch als landwirtschaftliche Schläge oder bewirtschaftete Feldblöcke bezeichnet. Das erfindungsgemäße Verfahren bezieht sich auf die Bearbeitung der genannten landwirtschaftlichen Flächen, wobei ein Vorgewende den randlichen Bereich, also den Begrenzungsbereich eines Feldes beschreibt, auf dem bei der Bearbeitung mittels einer landwirtschaftlichen Maschine für gewöhnlich gewendet wird. Bei der üblicherweise ohne Simulation und vorheriger Bestimmung streifenförmigen Bearbeitung weist ein Feld also an zwei gegenüberliegenden Seiten je ein Vorgewende auf. Dies sind zumeist die beiden kürzeren Seiten, da die Längsbearbeitung insgesamt mit weniger Wendevorgängen verbunden und dadurch wirtschaftlicher ist. Bearbeitet werden Vorgewendeflächen erst im Anschluss an den Hauptteil des bewirtschafteten Feldblockes quer zur sonstigen Bearbeitungsrichtung und parallel zum Ackerrand.

Die Gestaltung von Fahrspuren landwirtschaftlicher Maschinen im Vorgewende und/oder in der Hauptfläche beschreibt die Wahl der Fahrspurrichtung, sowie den Kurvenverlauf oder die Wahl der Reihenfolge der nacheinander gewählten Fahrspuren.

Die Simulation und die Bestimmung einer effektiven Bearbeitungsweise von landwirtschaftlichen Flächen erfolgt mittels einer Datenverarbeitungsanlage und erfolgt abhängig von möglichen Einfahrtspunkten in die landwirtschaftliche Fläche und von den topographischen Gegebenheiten, Hindernissen, Pflanzenzuständen, Bodenzuständen wie Feuchte, Nährstoffgehalt und Trockenmasse des Bodens und einem Reifegrad von Pflanzen, Früchten und der Lagerung von Ernteprodukten auf dem Boden.

Die genannten Größen, abhängig derer die Simulation, Berechnung oder Bestimmung erfolgt, können mittels Sensoren ermittelt und automatisch erfasst und abgespeichert werden, außerdem ist eine manuelle Eingabe in die Datenverarbeitungsanlage möglich sowie ein Zurückgreifen auf Informationen in Datenbanken denkbar. Die Informationen können beispielsweise saisonal also Jahreszeitabhängig gespeichert und wiedergegeben werden.

Als topographische Gegebenheiten werden beispielsweise der Höhenverlauf, das Vorhandensein von Gräben und Löchern und die Höhenlage einer landwirtschaftlichen Fläche bezeichnet. Hindernisse sind beispielsweise Bäume, Einzäunungen, Furchen oder andere den direkten Ablauf einer Flächenbearbeitung unterbrechende Gegebenheiten.

Einige Pflanzen oder Früchte werden nicht direkt bei der Ernte eingeholt, sondern nach dem Mähen oder "Abschneiden" einige Zeit auf dem Feldboden gelagert.

Grundsätzlich ist festzustellen, dass das erfindungsgemäße Verfahren bei sämtlichen Bearbeitungsvorgängen von landwirtschaftlichen Flächen eingesetzt werden kann. Dabei handelt es sich beispielsweise um die Ackerbestellung bzw. Aussaat, dem Ausbringen von Dünge- oder Pflanzenschutzmittel und/oder die Ernte.

Einen aus zeitlicher und finanzieller Sicht optimalen Fahrweg einer landwirtschaftlichen Maschine zur Ausbringung von Pflanzenschutzmitteln und Düngemitteln wird beispielsweise auf Grundlage von Sensordaten und/oder einer Applikationskarte simuliert und bestimmt. So kann es beispielsweise der Fall sein, dass bestimmte Bodenabschnitte des zu bearbeitenden Feldes besser mit natürlich vorkommenden Nährstoffen versogt sind, als benachbarte oder umgebende Feldareale, sodass diese Bodenabschnitte nicht mit der gleichen Düngemenge zu versehen sind, wie vergleichbar "schlechtere" Bodenabschnitte. Diese Daten sind beispielsweise in einen Bordcomputer einer landwirtschaftlichen Maschine zu implementieren, sodass die Düngemengenausgabe Bodenarealabhängig gesteuert werden kann. Die Ausgaben für Düngemittel werden somit reduziert und gleichzeitig die landwirtschaftlichen Flächen vor Überdüngung geschützt.

Das erfindungsgemäße Verfahren sieht vor, einen optimalen Fahrweg einer landwirtschaftlichen Maschine zum Einholen der Ernte auf Grundlage der Erntemenge und/oder des Nährstoff- oder Wassergehaltes von Pflanzen oder Früchten zu simulieren und/oder zu bestimmen.

Des Weiteren ist es denkbar einen optimalen Fahrweg einer Erntemaschine und/oder den Einfahrweg einer Erntemaschine (Anschnittpunkt des Schlages) in eine landwirtschaftliche Fläche unter Berücksichtigung des Reifegrades und/oder der Lagerung eines Ernteprodukts zu simulieren, zu berechnen bzw. zu bestimmen.

Außerdem kann in die Simulation/Bestimmung der Aufwand für die Befüllung eines Ausbringbehälters und/oder die Entleerung eines Erntebunkers miteinbezogen werden. So kann bereits im Vorfeld einer Ernte berechnet werden, zu welchem Zeitpunkt der Erntebunker einer Maschine gefüllt sein wird und welcher kürzeste Weg der Maschine zum Entleeren des Bunkers in einem landwirtschaftlichen Gehöft gewählt werden soll bzw. zu welchem Zeitpunkt weitere landwirtschaftliche Fahrzeuge zum Erntebunker gefahren werden sollen, um eine Entleerung des Erntebunkers direkt am Feld zu realisieren.

Die Datenverarbeitungsvorrichtung zur Simulation/Bestimmung/Berechnung einer effektiven Bearbeitungsweise von landwirtschaftlichen Flächen, kann in einem Bordcomputer einer landwirtschaftlichen Maschine integriert sein, so dass das Verfahren mit Hilfe von Satelliten bzw. GPS-Signalen in Echtzeit durchgeführt werden kann. Des Weiteren ist es denkbar die Datenverarbeitungsvorrichtung mit einem PC zu verbinden, welcher beispielsweise auf dem landwirtschaftlichen Anwesen installiert ist. Die simulierten, berechneten bzw. bestimmten Daten können mittels drahtloser oder anderweitiger Übertragung zu den landwirtschaftlichen Maschinen übertragen werden.

Des Weiteren ist es denkbar, die simulierten und/oder bestimmten Daten zur effektiven Bearbeitungsweise einer landwirtschaftlichen Fläche in Daten zur Steuerung des Fahrweges und/oder Steuerung zur Auslösung von automatischen oder angezeigten Schaltvorgängen von vollautomatischen oder manuell zu bedienenden landwirtschaftlichen Maschinen umzuwandeln.

## Patentansprüche

1. Verfahren zur Simulation und Bestimmung einer effektiven Bearbeitungsweise von landwirtschaftlichen Flächen,
**dadurch gekennzeichnet, dass**
eine Anzahl von Fahrspuren landwirtschaftlicher Maschinen in einem Vorgewende, eine Gestaltung von Fahrspuren landwirtschaftlicher Maschinen in dem Vorgewende und eine Anzahl von Fahrspuren landwirtschaftlicher Maschinen in einer Hauptfläche und eine Gestaltung der Fahrspuren landwirtschaftlicher Maschinen in der Hauptfläche im Hinblick auf eine optimierte Fahrstreckenlänge, eine Fahrzeit und einen Materialverbrauch und entstehenden Kosten bzgl. der Bearbeitung von landwirtschaftlichen Flächen simuliert und bestimmt wird, wobei
ein optimaler Fahrweg einer landwirtschaftlichen Maschine in Abhängigkeit von Pflanzenzuständen, Bodenzuständen und/oder einem Reifegrad von Pflanzen, Früchten und/oder der Lagerung von Ernteprodukten auf dem Boden simuliert und bestimmt wird, wobei
die Größen, abhängig derer die Simulation, Berechnung oder Bestimmung erfolgt, mittels Sensoren ermittelt und automatisch erfasst und abgespeichert werden, und/oder eine manuelle Eingabe in die Datenverarbeitungsanlage und/oder ein Zurückgreifen auf Informationen in Datenbanken ausgeführt werden.

2. Verfahren nach Anspruch 1,
**dadurch gekennzeichnet, dass**
die Simulation und die Bestimmung abhängig von möglichen Einfahrtspunkten in die landwirtschaftliche Fläche und von topographischen Gegebenheiten, Hindernissen, Pflanzenzuständen, Bodenzuständen wie Feuchte, Nährstoffgehalt und Trockenmasse des Bodens und Reifegrad von Pflanzen, Früchten und Lagerung von Ernteprodukten auf dem Boden erfolgt.

3. Verfahren nach Anspruch 1 oder 2,
**dadurch gekennzeichnet, dass**
es sich bei der Bearbeitung von landwirtschaftlichen Flächen um Ackerbestellung, Aussaat, Düngung, Ausbringen von Pflanzenschutzmitteln und Ernte handelt.

4. Verfahren nach einem der Ansprüche 1 bis 3,
**dadurch gekennzeichnet, dass**
ein optimaler Fahrweg einer landwirtschaftlichen Maschine zur Ausbringung von Pflanzenschutzmittel und Dünger auf Grundlage von Sensordaten oder einer Applikationskarte simuliert und bestimmt wird.

5. Verfahren nach einem der vorangegangenen Ansprüche,
**dadurch gekennzeichnet, dass**
ein optimaler Fahrweg einer landwirtschaftlichen Maschine zum Einholen der Ernte auf Grundlage der Erntemenge oder des Nährstoff- oder Wassergehaltes von Pflanzen oder Früchten simuliert wird.

6. Verfahren nach einem der vorangegangenen Ansprüche,
**dadurch gekennzeichnet, dass**
ein optimaler Fahrweg einer Erntemaschine unter Berücksichtigung des Reifegrades oder der Lagerung eines Ernteproduktes bestimmt wird.

7. Verfahren nach einem der vorangegangenen Ansprüche,
**dadurch gekennzeichnet, dass**
der Aufwand für die Befüllung eines Ausbringbehälters oder die Entleerung eines Erntebunkers in die Simulation und die Bestimmung einbezogen werden.

8. Verfahren nach einem der vorangegangenen Ansprüche,
**dadurch gekennzeichnet, dass**
die Simulation und die Bestimmung einer effektiven Bearbeitungsweise einer landwirtschaftlichen Fläche mittels eines Bordcomputers einer landwirtschaftlichen Maschine oder eines andersartig tragbaren oder fest installierten Computers erfolgt.

9. Verfahren nach einem der vorangegangenen Ansprüche,
**dadurch gekennzeichnet, dass**
die bestimmten und simulierten Daten zur effektiven Bearbeitungsweise einer landwirtschaftlichen Fläche einem Bordcomputer einer landwirtschaftlichen Maschine oder einem andersartig tragbaren oder fest installierten Computer übermittelt werden.

10. Verfahren nach einem der vorangegangenen Ansprüche,
**dadurch gekennzeichnet, dass**
die bestimmten simulierten Daten zur effektiven Bearbeitungsweise einer landwirtschaftlichen Fläche in Daten zur Steuerung des Fahrweges und Steuerung zur Auslösung von automatischen oder angezeigten Schaltvorgängen von vollautomatischen oder manuell zu bedienenden landwirtschaftlichen Maschinen umgewandelt werden.

## Claims

1. A method for simulating and determining an effective processing for agricultural surface, **characterized in that**
a number of drive tracks of agricultural machines in a headland, a configuration of drive tracks of the agricultural machines in the headland, and a number of drive tracks of the agricultural machines in a main surface and a configuration of the drive tracks of the agricultural machines in the main surface are simulated and determined with respect to an optimum drive path length, a drive time, and a material consumption and resulting cost with respect to processing the agricultural surfaces,
wherein an optimum drive track of an agricultural machine is simulated and determined as a function of plant condition, ground conditions and/or a degree of maturity of plants, fruits and/or storage of harvest products on the ground,
wherein variables that are used for simulation, computation or determination are determined by sensors and automatically detected and stored, and/or a manual entry into the data processing system, and/or a resorting to information in the databases is performed.

2. The method according to claim 1, **characterized in that**
the simulation and determination is performed as a function of possible entry points into the agricultural surface and as a function of topographic conditions, obstacles, plant conditions, ground conditions including humidity, nutrient content, and dry mass of the soil and degree of maturity of plants, fruits and storage of harvest products on the ground.

3. The method according to claim 1 or 2,
**characterized in that**
processing the agricultural surfaces includes cultivating, sowing, fertilizing, dispensing plant protection products, and harvesting.

4. The method according to claims 1 through 3,
**characterized in that**
an optimum drive track of an agricultural machine for dispensing plant protection products and fertilizers is simulated and determined based on sensor data or base on an application chart.

5. The method according to one of the preceding claims,
**characterized in that**
an optimum drive track of an agricultural machine for reaping a harvest is simulated based on a harvest amount or a nutrient and water content of plants or fruits.

6. The method according to one of the preceding claims,
**characterized in that**
an optimum drive track of a harvest machine is determined in view of a degree of maturity or a storage of a harvest product.

7. The method according to one of the preceding claims,
**characterized in that**
filling a dispensing container or emptying a harvest hopper is included into the simulation and the determination.

8. The method according to one of the preceding claims,
**characterized in that**
the simulation and the determination of an effective operating method of an agricultural surface is determined by an onboard computer of an agricultural machine or by another portable or installed computer.

9. The method according to one of the preceding claims,
**characterized in that**
the determined and simulated data for effectively processing an agricultural surface is transmitted to an onboard computer of an agricultural machine or to another portable or installed computer.

10. The method according to one of the preceding claims,
**characterized in that**
the determined simulated data for effectively processing an agricultural surface is converted into data for controlling the drive path and controlling automatic or displayed switching processes of fully automated or manually operated agricultural machines.

## Revendications

1. Procédé pour la simulation et la détermination d'une procédure de travail efficace de surfaces agricoles,
**caractérisé en ce que**
l'on simule et l'on détermine un nombre de voies de déplacement de machines agricoles dans une tournière et un nombre de voies de déplacement de machines agricoles dans une surface principale, ainsi qu'une configuration des voies de déplacement de machines agricoles dans la surface principale dans le but d'optimiser une longueur du trajet de déplacement, une durée de déplacement et une consommation de matériaux et des coûts résultants par rapport au travail des surfaces agricoles,
l'on simule et l'on détermine un trajet de déplacement optimal d'une machine agricole en fonction des états des plantations, des états du sol et/ou du degré de maturité des plantes, des fruits, et/ou du stockage des produits récoltés sur le sol, et
les grandeurs en fonction desquelles la simulation, le calcul et la détermination ont lieu sont déterminées au moyen de capteurs, sont saisies de façon automatique et sont mémorisées, et/ou on exécute une entrée manuelle dans l'installation de traitement de données et/ou un recours à des informations dans des bases de données.

2. Procédé selon la revendication 1,
**caractérisé en ce que**
la simulation et la détermination ont lieu en fonction des points d'accès possibles dans la surface agricole et des données topographiques, des obstacles, des états des plantations, des états du sol, comme humidité, teneur en substances nutritives et masse sèche du sol ainsi que du degré de maturité des plantes, des fruits, et du stockage des produits récoltés sur le sol.

3. Procédé selon la revendication 1 ou 2,
**caractérisé en ce que** le travail des surfaces agricoles est la mise en culture, l'ensemencement, l'épandage d'engrais, l'épandage de produits phytosanitaires et la récolte.

4. Procédé selon l'une des revendications 1 à 3,
**caractérisé en ce que** l'on simule et l'on détermine un trajet de déplacement optimal d'une machine agricole pour l'épandage de produits phytosanitaires et d'engrais sur la base des données de capteurs et d'une carte d'application.

5. Procédé selon l'une des revendications précédentes,
**caractérisé en ce que** l'on simule un trajet de déplacement optimal d'une machine agricole pour la récolte sur la base de la quantité à récolter ou de la teneur nutritive ou de la teneur en eau des plantes ou des fruits.

6. Procédé selon l'une des revendications précédentes,
**caractérisé en ce que** l'on détermine un trajet de déplacement optimal d'une machine de récolte en tenant compte du degré de maturité ou du stockage d'un produit récolté.

7. Procédé selon l'une des revendications précédentes,
**caractérisé en ce que** le travail et les dépens pour le remplissage d'un réservoir d'épandage ou la vidange d'un silo de récolte sont intégrés dans la simulation et la détermination.

8. Procédé selon l'une des revendications précédentes,
**caractérisé en ce que** la simulation et la détermination d'une procédure de travail efficace d'une surface agricole s'effectuent au moyen d'un ordinateur embarqué d'une machine agricole ou d'un autre ordinateur portable ou installé de manière fixe.

9. Procédé selon l'une des revendications précédentes,
**caractérisé en ce que** les données déterminées et simulées, en vue d'une procédure de travail efficace d'une surface agricole sont transmises à un ordinateur embarqué d'une machine agricole ou à un autre ordinateur portable ou installé de manière fixe.

10. Procédé selon l'une des revendications précédentes,
**caractérisé en ce que** les données déterminées et simulées, en vue d'une procédure de travail efficace d'une surface agricole, sont converties en données pour la commande du trajet de déplacement et la commande pour le déclenchement d'opérations de commutation automatiques ou affichées de machines agricoles entièrement automatiques ou à commander manuellement.
